# FASCICULE DE BREVET EUROPEEN

(11) **EP 4 405 252 B1**
(45) Date de publication et mention de la délivrance du brevet: **05.11.2025**
(21) Numéro de dépôt: 22786918.7
(22) Date de dépôt: 16.09.2022
(51) Int. Cl.: B64D 11/06

(54) **ACCOUDOIR DE SIÈGE MOBILE SANS ACTIONNEUR**
AKTUATORLOSE BEWEGLICHE SITZARMLEHNE
ACTUATORLESS MOVABLE SEAT ARMREST

(30) Priorité: 20.09.2021 FR 2109843
(43) Date de publication de la demande: 31.07.2024
(73) Titulaire: Safran Seats, 78370 Plaisir (FR)
(72) Inventeur: LOPEZ, Bruno, 77550 Moissy-Cramayel (FR); SOUISSI ZOUAOUI, Mouna, 77550 Moissy-Cramayel (FR)
(74) Mandataire: Marconnet, Sébastien
(86) Numéro de dépôt international: PCT/EP2022/075816
(87) Numéro de publication internationale: WO 2023/041729

(56) Documents cités:
- EP-A1- 2 619 092
- US-A1- 2009 302 158
- US-A1- 2010 201 172

## Description

La présente invention porte sur un accoudoir de siège mobile sans actionneur. L'invention trouve une application particulièrement avantageuse, mais non exclusive, avec les sièges d'avion, en particulier les sièges d'avion de type classe affaires.

De façon connue en soi, un siège de type classe affaires comporte une assise et un dossier articulé par rapport à l'assise par l'intermédiaire d'une liaison pivot. Le cas échéant, le siège pourra comporter un repose-jambes articulé par rapport à l'assise par l'intermédiaire d'une liaison pivot. L'assise et le dossier sont montés sur un support de siège destiné à être fixé sur le plancher d'un avion par l'intermédiaire de rails de fixation.

Le siège est avantageusement pourvu d'une cinématique lui permettant d'être mobile entre une position relevée et une position lit. Dans la position relevée, le dossier et le repose-jambes forment chacun un angle non nul par rapport à l'assise. La position relevée est une position adaptée à une phase de décollage, d'atterrissage, ou de stationnement de l'avion. Dans la position lit, le dossier et le repose-jambes se situent dans un prolongement de l'assise de façon à former une surface de couchage sensiblement horizontale pour le passager.

Le document EP2619092 enseigne la réalisation d'un accoudoir relié mécaniquement au siège par l'intermédiaire d'un mécanisme de déploiement permettant de faire passer l'accoudoir d'une position haute à une position basse. Dans la position haute, une face supérieure de l'accoudoir se situe à un niveau supérieur par rapport à l'assise lorsque le siège est en position relevée. Dans la position basse, une face supérieure de l'accoudoir se situe sensiblement au même niveau que l'assise lorsque le siège est en position lit.

US 2009/302158 A1 concerne un siège de passager d'aéronef comportant un siège primaire comportant un dossier de siège, un baquet, une surface de support secondaire située en regard du siège primaire, et des accoudoirs. Le siège de passager est capable d'adopter une configuration verticale, une configuration inclinée et une configuration sensiblement plane. Dans la configuration verticale, les accoudoirs sont en position haute. Dans la configuration sensiblement plane, les accoudoirs sont en position basse.

Le problème d'une telle configuration est que le déplacement de l'accoudoir est piloté par un déplacement du dossier. Or, si la cinématique du dossier est modifiée d'un modèle de siège à un autre, il n'est pas possible de garantir un déplacement adapté de l'accoudoir en fonction de la position du siège.

L'invention vise notamment à remédier efficacement à cet inconvénient précité en proposant un siège convertible entre une position relevée et une position lit comportant:
- une assise et un dossier,
- une cinématique de déplacement du siège pour faire passer le siège d'une position relevée à une position lit et inversement, ladite cinématique de déplacement du siège comportant au moins une pièce mobile liée mécaniquement à l'assise,
- un accoudoir mobile entre une position haute et une position basse, et
- un mécanisme de déploiement de l'accoudoir permettant de faire passer automatiquement l'accoudoir de la position haute à la position basse lorsque le siège passe de la position relevée à la position lit, et inversement,
- ledit mécanisme de déploiement de l'accoudoir comportant:
- une première liaison de guidage comprenant un premier galet lié mécaniquement à la pièce mobile associée à l'assise, ledit premier galet coopérant avec une première rainure ménagée dans l'accoudoir, et
- une deuxième liaison de guidage comprenant un deuxième galet lié mécaniquement à une pièce fixe, ledit deuxième galet coopérant avec une deuxième rainure ménagée dans l'accoudoir, de sorte qu'un déplacement de l'assise du siège lors d'un passage de la position relevée à la position lit du siège pilote un déplacement de l'accoudoir de la position haute vers la position basse.

L'invention permet ainsi, grâce au pilotage de l'accoudoir par un déplacement de l'assise, de garantir un déplacement synchronisé de l'accoudoir par rapport à l'assise lorsque le siège passe d'une position relevée à une position lit. L'invention peut ainsi être intégrée sur un siège indépendamment de la configuration de son dossier susceptible de varier d'un type de siège à l'autre. En outre, le déplacement de l'accoudoir étant piloté par un déplacement de l'assise, l'invention permet de faire l'économie d'un actionneur dédié au déplacement de l'accoudoir d'une position à une autre.

Selon l'invention, ledit siège comporte en outre un chariot monté mobile en translation par rapport à la pièce fixe, et au moins une biellette de basculement, notamment deux biellettes de basculement, ayant chacune une première extrémité liée en rotation avec ledit chariot et une deuxième extrémité liée en rotation avec une partie supérieure de l'accoudoir.

Selon une réalisation de l'invention, la ou les biellettes de basculement sont logées au moins en partie à l'intérieur de l'accoudoir.

Selon une réalisation de l'invention, la deuxième rainure de guidage présente une portion rectiligne et une portion incurvée, ladite portion rectiligne autorisant l'accoudoir à se déplacer uniquement en translation horizontale sur une distance prédéterminée avant de changer de niveau.

Selon une réalisation de l'invention, la distance prédéterminée est comprise entre 40% et 60% d'une course totale de l'accoudoir entre la position haute et la position basse.

Selon une réalisation de l'invention, la pièce fixe est constituée par une coque d'intimité ou une console associée audit siège.

Selon une réalisation de l'invention, ledit siège comporte une manchette destinée à combler un espace entre ledit accoudoir et le dossier lorsque l'accoudoir se trouve en position basse.

Selon une réalisation de l'invention, une pièce liée à l'assise est apte à remonter la manchette vers le haut lors d'un déplacement du siège de la position relevée à la position lit.

Selon une réalisation de l'invention, une face supérieure de l'accoudoir forme un angle de l'ordre de quelques degrés avec un plan horizontal lorsque l'accoudoir se trouve en position basse. Cet angle d'inclinaison est dû aux conditions de vol suivant lesquelles l'avion est incliné par rapport à l'horizontale d'un angle de l'ordre de 3 degrés.

L'invention a également pour objet une cabine de véhicule comportant un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue de côté d'un siège d'avion muni d'un accoudoir selon la présente invention montré en transparence respectivement dans une position haute et dans une position basse;
[Fig. 2a] [Fig. 2b] [Fig. 2c] Les figures 2a, 2b, et 2c sont des vues de côté d'un siège d'avion muni d'un accoudoir selon la présente invention respectivement lorsque le siège se trouve dans une position relevée, une position relax, et une position lit;
[Fig. 3] La figure 3 est une vue détaillée de côté d'un accoudoir de siège selon la présente invention;
[Fig. 4] La figure 4 est une représentation schématique des différentes liaisons mécaniques entre l'accoudoir et le siège selon l'invention;
[Fig. 5] La figure 5 est une vue en perspective illustrant le positionnement des bielles de basculement à l'intérieur d'un corps creux de l'accoudoir selon l'invention;
[Fig. 6] La figure 6 est une vue de côté d'un siège selon l'invention en position lit illustrant la présence d'une manchette permettant de combler un espace entre l'accoudoir et une partie du dossier du siège lorsque l'accoudoir est en position basse;
[Fig. 7] La figure 7 est une vue détaillée de côté de la manchette permettant de combler un espace entre l'accoudoir et une partie du dossier du siège lorsque l'accoudoir est en position basse;
[Fig. 8a] [Fig. 8b] [Fig. 8c] Les figures 8a, 8b, et 8c illustrent un déplacement de l'accoudoir selon l'invention entre une position haute et une position basse;
[Fig. 9] La figure 9 est une vue en perspective d'une variante de réalisation de l'accoudoir selon la présente invention fixé sur une pièce fixe constituée par le support de siège.

Les éléments identiques, similaires, ou analogues conservent la même référence d'une figure à l'autre.

Dans la suite de la description, les termes relatifs du type "horizontal" "vertical", "haut", "bas", sont entendus par référence au sens commun que leur donnerait une personne assise sur un siège selon l'invention installé dans une cabine d'avion.

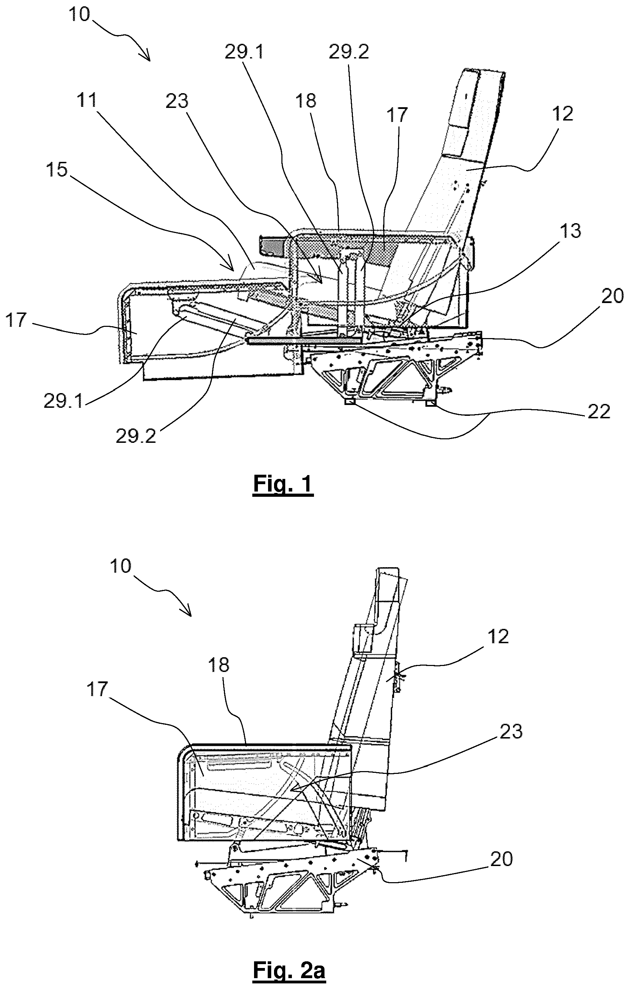

La figure 1 montre un siège 10 notamment pour une cabine d'avion comportant une assise 11, un dossier 12 articulé par rapport à l'assise 11 par l'intermédiaire d'une liaison pivot 13 à axe horizontal. Le cas échéant, le siège 10 pourra comporter un repose-jambes 15 articulé par rapport à l'assise 11 par l'intermédiaire d'une liaison pivot 16 à axe horizontal. Le siège 10 comporte également au moins un accoudoir 17 ayant une paroi supérieure 18 sur laquelle un passager peut poser une partie de son corps, notamment son bras.

Le siège 10 comporte également un support de siège 20 destiné à être fixé sur des rails d'une cabine d'avion. A cet effet, le support de siège 20 comporte des pieds portant des verrous 22 aptes à solidariser le support de siège 20 avec des rails de la cabine d'avion.

Le siège 10 est pourvu d'une cinématique lui permettant d'être mobile entre une position relevée et une position lit. La cinématique comporte un ensemble d'actionneurs, de pièces de liaison, et d'articulations permettant d'assurer le déplacement relatif des différents composants du siège 10 lors d'un passage d'une position à une autre.

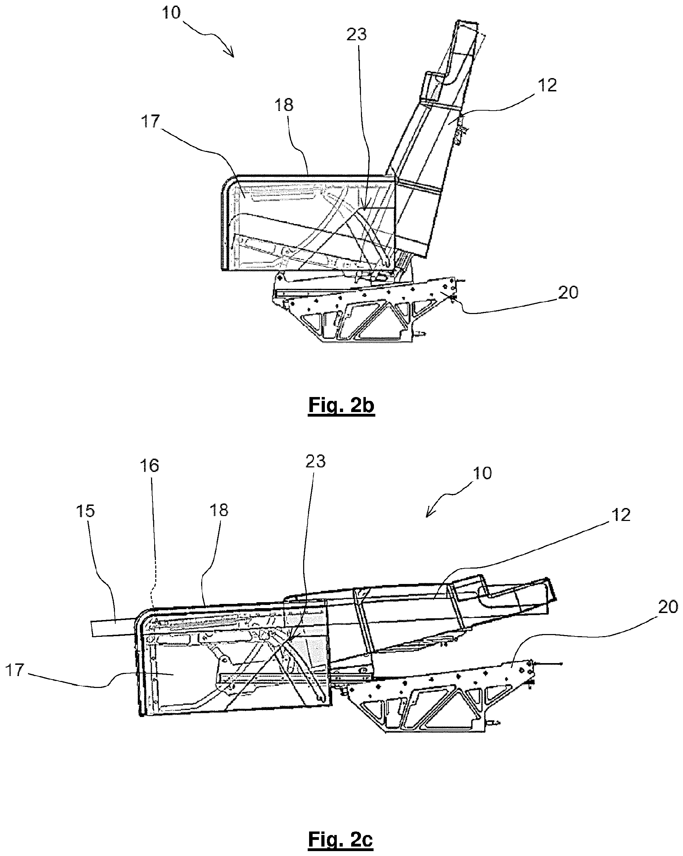

Dans la position relevée visible sur la figure 2a, le dossier 12 forme un angle non nul par rapport à l'assise 11. La position relevée est une position adaptée à une phase de décollage, d'atterrissage ou de stationnement de l'avion. Dans la position lit visible sur la figure 2c, le dossier 12 et le repose-jambes 15 se situent dans un prolongement de l'assise 11 de façon à former une surface de couchage pour le passager sensiblement horizontale. Lors d'un passage de la position relevée à la position lit, l'assise 11 se déplace en translation vers l'avant du siège 10 tandis que le dossier 12 se déplace en rotation par rapport à l'assise 11 vers l'arrière du siège 10. Le siège 10 pourra également prendre des positions de confort intermédiaires dans lesquelles le dossier 12 est fortement incliné vers l'arrière, telles que la position montrée sur la figure 2b.

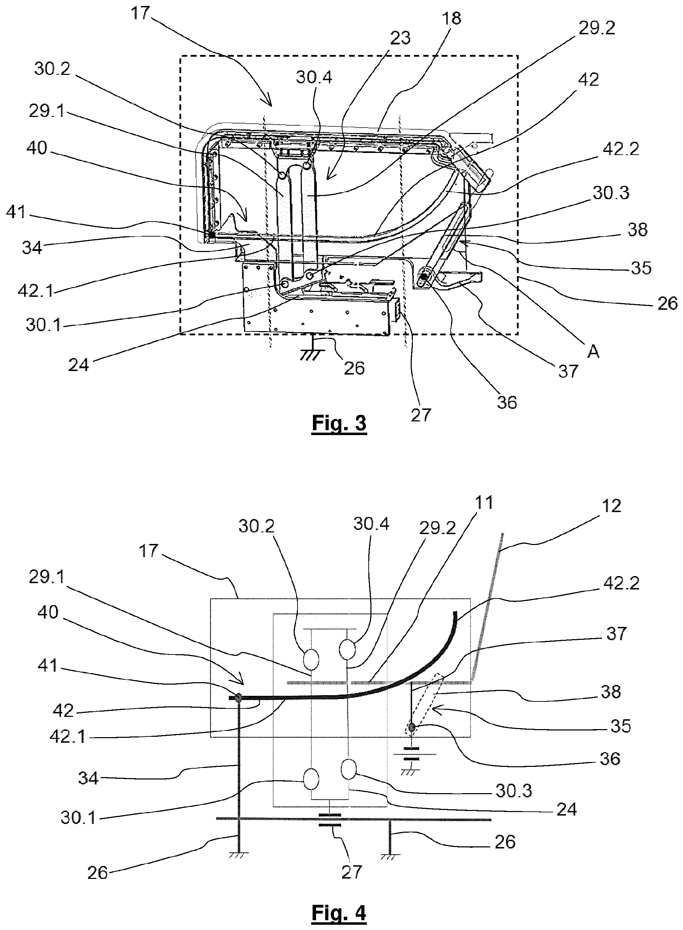

Par ailleurs, comme on peut le voir sur les figures 1 et 3, un mécanisme de déploiement 23 de l'accoudoir 17 permet de faire passer automatiquement l'accoudoir 17 d'une position haute à une position basse lorsque le siège 10 passe de la position relevée à la position lit, et inversement. Par "automatiquement", on entend le fait que l'accoudoir 17 peut passer d'une position à une autre sans action du passager lorsque le siège 10 se déplace d'une position à une autre.

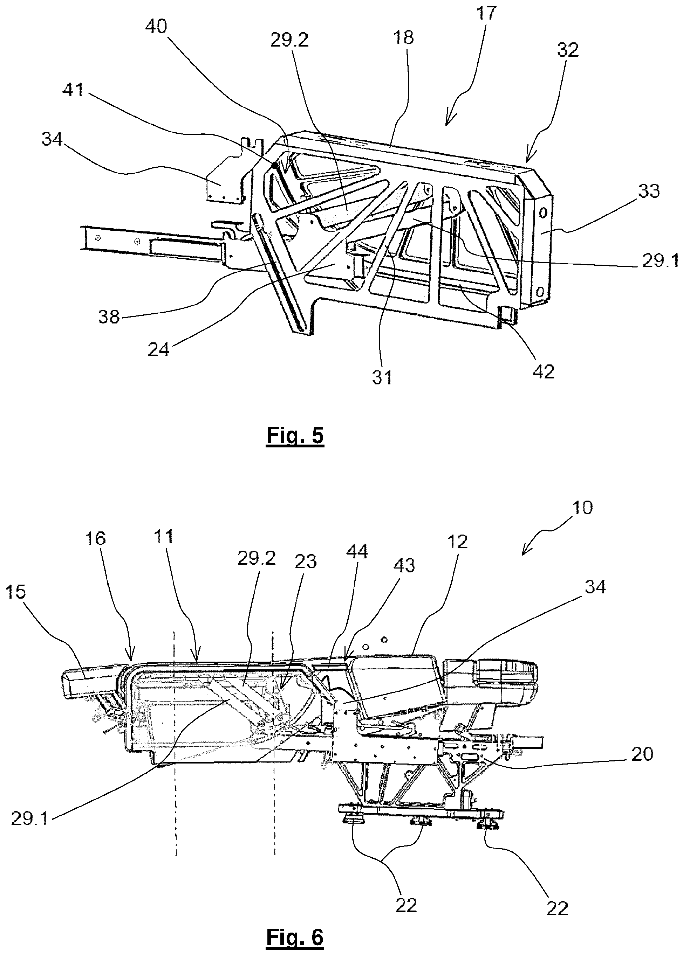

En position haute visible sur la figure 2a, la paroi supérieure 18 de l'accoudoir 17 se situe au-dessus de l'assise 11 lorsque le siège 10 se trouve en position relevée. En position basse visible sur les figures 2c et 6, la paroi supérieure 18 de l'accoudoir 17 se situe sensiblement au même niveau qu'une face supérieure de l'assise 11 lorsque le siège 10 se situe en position lit. Le niveau de la paroi supérieure 18 de l'accoudoir 17 est mesuré verticalement par rapport au plancher de la cabine d'avion. Par "sensiblement au même niveau", on entend le fait qu'il peut exister tout au plus une légère différence de niveau, notamment inférieure à 5cm, entre la paroi supérieure 18 de l'accoudoir 17 et la face supérieure de l'assise 11.

Plus précisément, comme on peut le voir sur les figures 3, 4, et 5, le mécanisme de déploiement 23 de l'accoudoir 17 comporte un chariot 24 portant l'accoudoir 17. Ce chariot 24 est mobile en translation par rapport à une pièce fixe 26. A cet effet, le chariot 24 est apte à coulisser le long d'une glissière 27 montée sur la pièce fixe 26.

La pièce fixe 26 pourra être constituée par une coque d'intimité ou une console associée audit siège 10. La coque d'intimité entoure au moins en partie le siège 10 de façon à créer un espace semi-clos autour du siège 10 afin de conférer une certaine intimité au passager. La console pourra être constituée classiquement par un meuble comportant une surface supérieure formant une table ainsi que des rangements pour le passager comportant un ou plusieurs éléments parmi une pochette littérature, un porte-bouteille, ou un minibar. Le choix des rangements est configurable en fonction du souhait de la compagnie aérienne.

Au moins une biellette de basculement 29.1, 29.2 est montée entre le chariot 24 et l'accoudoir 17. Dans l'exemple représenté, on prévoit deux biellettes de basculement 29.1, 29.2 ayant chacune une première extrémité liée en rotation avec le chariot 24 et une deuxième extrémité liée en rotation avec une partie supérieure de l'accoudoir 17, tel que montré sur les figures 3 et 4.

La biellette 29.1 est ainsi connectée respectivement avec le chariot 24 par l'intermédiaire d'une liaison pivot 30.1 et avec la partie supérieure de l'accoudoir 17 par l'intermédiaire d'une liaison pivot 30.2. La biellette 29.2 est connectée respectivement avec le chariot 24 par l'intermédiaire d'une liaison pivot 30.3 et avec la partie supérieure de l'accoudoir 17 par l'intermédiaire d'une liaison pivot 30.4.

Les biellettes de basculement 29.1, 29.2 permettent de renforcer mécaniquement l'accoudoir 17 de façon à pouvoir répondre à des contraintes imposées par des tests de certification suivant lesquels des surcharges, notamment de l'ordre de 1000N à 1500N sont appliquées verticalement et horizontalement sur l'accoudoir 17. L'intégration des biellettes de basculement 29.1, 29.2 permet de passer les tests de certification quelle que soit la position de l'accoudoir 17.

Comme cela est visible sur la figure 5, les biellettes de basculement 29.1, 29.2 sont logées au moins en partie à l'intérieur d'un corps creux de l'accoudoir 17. Plus précisément, le corps de l'accoudoir 17 comporte la paroi supérieure 18, deux parois latérales 31, 32, ainsi qu'au moins une paroi d'extrémité 33. L'accoudoir 17 présente ainsi une section en forme de U délimitant un creux dans lequel sont disposées les biellettes de basculement 29.1, 29.2. Les parois de l'accoudoir 17, notamment les parois latérales 31, 32 pourront être ajourées afin de réduire le poids de l'accoudoir 17. L'accoudoir pourra être réalisé dans un matériau métallique, tel que de l'acier, de l'aluminium, ou du magnésium, ou dans un matériau plastique rigide, ou dans un matériau composite chargé en fibre, ou dans tout autre matériau adapté à l'application.

Par ailleurs, une première liaison de guidage 35 comprend un premier galet 36 fixé sur une pièce mobile 37. Le premier galet 36 coopère avec une première rainure de guidage 38 ménagée dans l'accoudoir 17. La pièce mobile 37 est liée mécaniquement à l'assise 11 qui se déplace en translation lors d'un changement de position du siège 10.

La première rainure de guidage 38 est réalisée dans la paroi latérale 31 de l'accoudoir 17, tel que montré sur la figure 5. La première rainure de guidage 38 présente une forme rectiligne. La première rainure de guidage 38 est inclinée par rapport à une direction verticale. La première rainure de guidage 38 pourra ainsi former un angle A compris entre 10 et 45 degrés par rapport à une direction verticale, tel que montré sur la figure 3.

Une deuxième liaison de guidage 40 comprend un deuxième galet 41 lié mécaniquement à la pièce fixe 26. Le deuxième galet 41 coopère avec une deuxième rainure de guidage 42 ménagée dans l'accoudoir 17. En l'occurrence, le deuxième galet 41 est porté par une pièce de support 34 fixée sur la pièce fixe 26 (coque d'intimité ou console). La pièce de support 34 pourra présenter globalement une forme en L.

La deuxième rainure de guidage 42 est réalisée dans la paroi latérale 32 opposée à la paroi latérale 31. La deuxième rainure de guidage 42 présente une portion rectiligne 42.1 et une portion incurvée 42.2. La portion rectiligne 42.1 autorise l'accoudoir 17 à se déplacer uniquement en translation horizontale sur une distance prédéterminée avant de changer de niveau. Par "changer de niveau", on entend une modification de la position de l'accoudoir 17 suivant l'axe vertical. La distance prédéterminée est comprise de préférence entre 40% et 60% d'une course totale de l'accoudoir 17 entre la position haute et la position basse. On s'assure ainsi que l'accoudoir 17 se déplace uniquement en translation avec l'assise 11 lorsque le siège 10 prend des positions intermédiaires entre la position relevée et la position lit.

La portion incurvée 42.2 autorise l'accoudoir 17, à la fin de son déplacement en translation, de changer de niveau pour passer à la position basse lorsque le siège 10 se déplace vers la position lit. La forme de la deuxième rainure de guidage 42 correspond à la trajectoire de l'accoudoir 17 lors de son déplacement de la positon haute à la position basse ou inversement.

La configuration du siège 10 est telle qu'un déplacement de l'assise 11 lors d'un passage de la position relevée à la position lit du siège 10 pilote un déplacement de l'accoudoir 17 de la position haute vers la position basse. Inversement, un déplacement de l'assise 11 du siège 10 de la position lit à la position relevée pilote un déplacement de l'accoudoir 17 de la position basse vers la position haute. Le déplacement de l'accoudoir 17 étant piloté par un déplacement de l'assise 11, l'invention permet de faire l'économie d'un actionneur dédié au déplacement de l'accoudoir 17 d'une position à une autre.

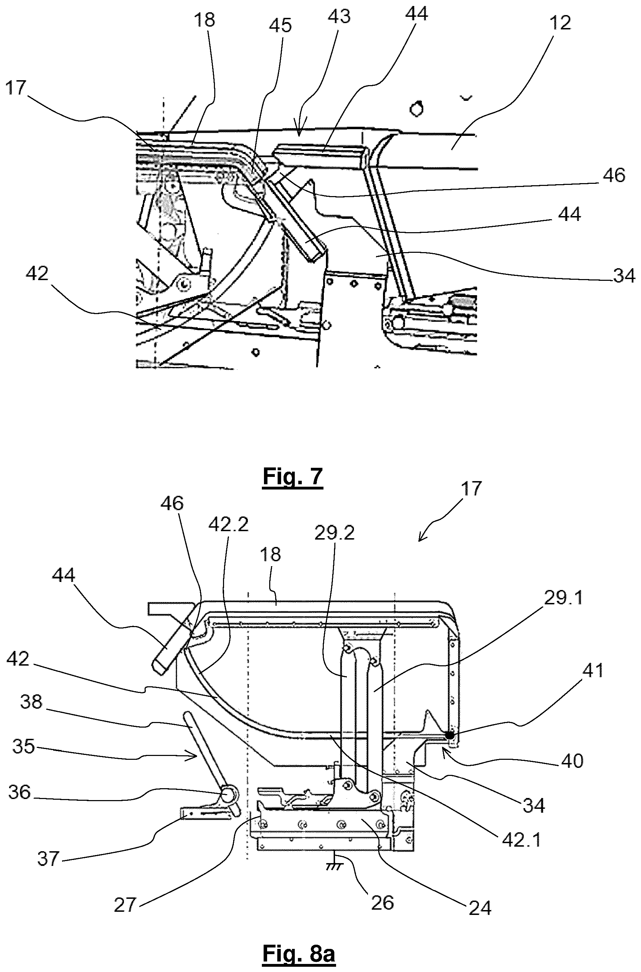

Avantageusement, comme on peut le voir sur les figures 6 et 7, le siège 10 comporte une manchette 44 destinée à combler un espace 43 entre l'accoudoir 17 et une partie du dossier 12 lorsque l'accoudoir 17 se trouve en position basse. La manchette 44 est connectée mécaniquement à la partie arrière de l'accoudoir 17 par l'intermédiaire d'une liaison pivot 45. Une pièce 46 liée à l'assise 11 est apte à remonter la manchette 44 lors d'un déplacement du siège 10 de la position relevée à la position lit. Le déplacement de la manchette 44 est tel que cette dernière s'étend horizontalement de façon à combler l'espace 43 entre l'accoudoir 17 et une partie du dossier 12 lorsque l'accoudoir 17 se trouve en position basse. La manchette 44 tombe sous son propre poids lorsque l'accoudoir 17 passe de la position basse à la position haute.

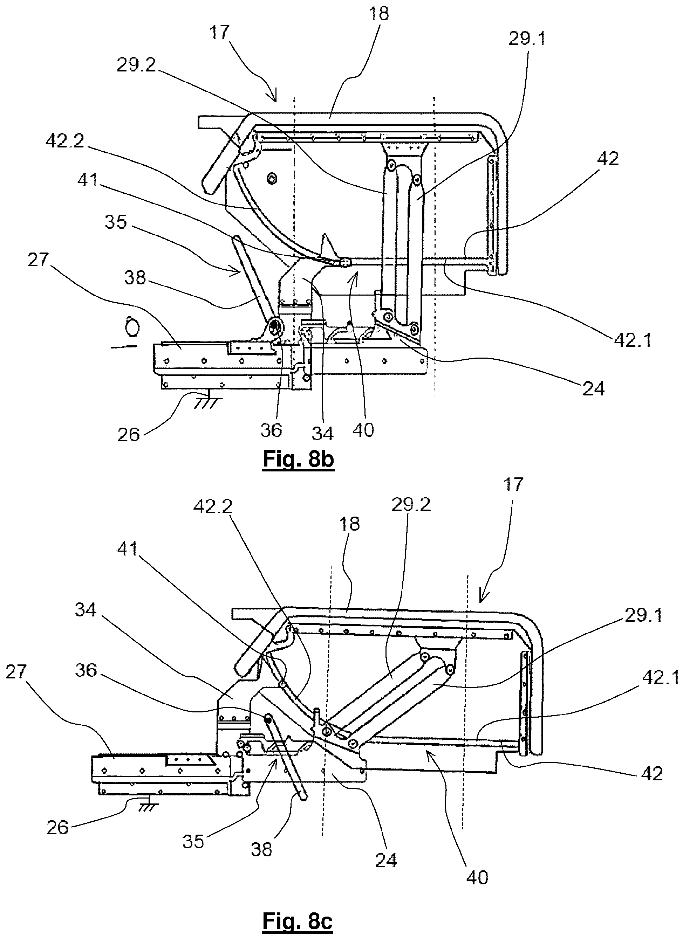

On décrit ci-après, en référence avec les figures 8a à 8c, le fonctionnement de l'accoudoir 17 lorsque le siège 10 passe de la position relevée à la position lit.

Lorsque le passager commande un changement de position du siège 10 de la position relevée à la position lit, la pièce mobile 37 liée à l'assise 11 se déplace en translation vers l'avant.

La pièce mobile 37 entraîne alors en translation vers l'avant le chariot 24 et l'accoudoir 17 via le premier galet 36. L'accoudoir 17 se déplace via le deuxième galet 41 suivant la portion rectiligne 42.1 de la deuxième rainure de guidage 42. Lors du déplacement de l'accoudoir 17 suivant la portion rectiligne 42.1, le siège 10 pourra prendre différentes positions intermédiaires. Lors de son déplacement en translation, l'accoudoir 17 est maintenu au même niveau que celui auquel il se trouve lorsque le siège 10 se trouve en position relevée.

Une fois que l'accoudoir 17 a parcouru la portion rectiligne 42.1, l'accoudoir 17 coulisse suivant la portion incurvée 42.2 de la deuxième rainure de guidage 42. L'accoudoir 17 descend en direction du plancher pour passer en position basse de façon que la paroi supérieure 18 se situe sensiblement au même niveau que l'assise 11 lorsque le siège 10 est en position lit. Afin de permettre le déplacement vers le bas de l'accoudoir 17, le premier galet 36 remonte le long de la première rainure de guidage 38. Les biellettes 29.1, 29.2 pivotent alors autour de leurs liaisons pivots respectives 30.1-30.4 de façon à accompagner la descente de l'accoudoir 17 vers la position basse.

Lorsque l'accoudoir 17 se trouve en position basse, une face supérieure de l'accoudoir 17 forme avantageusement un angle de l'ordre de quelques degrés par rapport à un plan horizontal parallèle au plancher de la cabine d'avion. Cet angle correspond à l'angle que forme la surface de lit du siège 10 pour compenser un angle d'inclinaison de l'avion en vol. Cet angle est par exemple compris entre 2 et 5 degrés et vaut de préférence de l'ordre de 3 degrés.

Concomitamment au déplacement de l'accoudoir 17 vers sa position basse, la manchette 44 initialement plaquée contre une paroi de l'accoudoir 17 est entraînée par la pièce 46 de façon à se redresser pour s'étendre dans un plan horizontal et combler l'espace 43 entre l'accoudoir 17 et une partie du dossier 12.

Lorsque le siège 10 passera de la position lit à la position relevée, l'accoudoir 17 effectuera un mouvement inverse de façon à repasser en position haute.

La configuration de l'accoudoir 17 décrite ci-dessus permet de faciliter le passage des tests de certification. En effet, l'intégration de l'accoudoir 17 directement sur la structure du siège 10 engendrerait des contraintes mécaniques supplémentaires sur le siège 10 lors de l'application d'efforts représentatifs d'un choc sur le siège 10. A l'inverse, le fait de faire supporter l'accoudoir 17 par une pièce fixe 26 annexe au siège 10 (coque d'intimité ou console) permet de réduire les contraintes mécaniques subies par le siège 10 lors du test de certification.

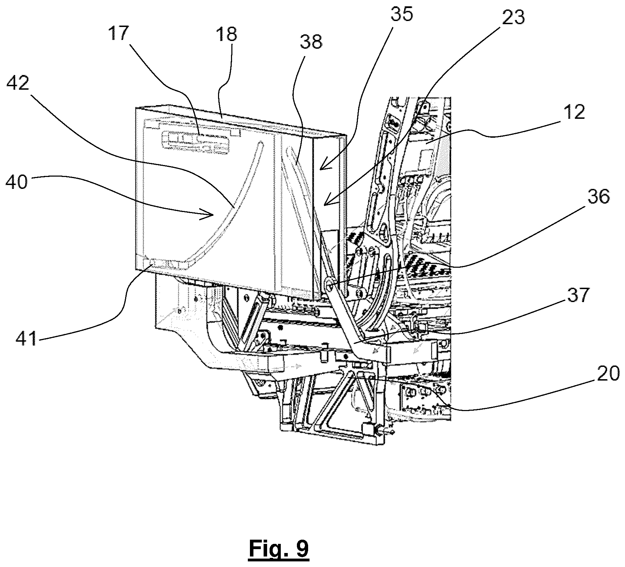

Il est toutefois envisageable de monter l'accoudoir 17 sur le support de siège 20 qui constitue alors la pièce fixe 26, tel que cela est illustré par la figure 9.

Suivant une configuration dégradée moins résistante aux surcharges appliquées sur l'accoudoir 17, il est également possible de supprimer la présence des biellettes de basculement 29.1, 29.2 et du chariot 24. Le mécanisme de déploiement 23 de l'accoudoir 17 comporte alors uniquement la première liaison de guidage 35 et la deuxième liaison de guidage 40 assurant un guidage de l'accoudoir 17 entre la position haute et la position basse, tel que montré sur la figure 9.

Bien entendu, les différentes caractéristiques et/ou formes de réalisation de la présente invention peuvent être associées les unes avec les autres selon diverses combinaisons dans la mesure où elles sont dans le cadres des revendications et dans la mesure où elles ne sont pas incompatibles ou exclusives les unes des autres.

En outre, l'invention n'est pas limitée aux modes de réalisation décrits précédemment et fournis uniquement à titre d'exemple. Elle englobe diverses modifications que pourra envisager l'homme du métier dans le cadre de la présente invention telle que définie par les revendications.

Bien que l'invention ait été décrite pour un siège installé dans une cabine d'avion, l'invention pourrait également être mise en œuvre dans un autre véhicule de transport tel qu'un train, un bus, un bateau, ou tout autre aéronef tel qu'un hélicoptère.

## Revendications

1. Siège (10) convertible entre une position relevée et une position lit comportant:
- une assise (11) et un dossier (12),
- une cinématique de déplacement du siège (10) pour faire passer le siège (10) d'une position relevée à une position lit et inversement, ladite cinématique de déplacement du siège (10) comportant au moins une pièce mobile (37) liée mécaniquement à l'assise (11),
- un accoudoir (17) mobile entre une position haute et une position basse, et
- un mécanisme de déploiement (23) de l'accoudoir (17) permettant de faire passer automatiquement l'accoudoir (17) de la position haute à la position basse lorsque le siège (10) passe de la position relevée à la position lit, et inversement, ledit mécanisme de déploiement (23) de l'accoudoir (17) comportant:
- une première liaison de guidage (35) comprenant un premier galet (36) lié mécaniquement à la pièce mobile (37) associée à l'assise (11), ledit premier galet (36) coopérant avec une première rainure ménagée dans l'accoudoir (17), et
- une deuxième liaison de guidage (40) comprenant un deuxième galet (41) lié mécaniquement à une pièce fixe (26), ledit deuxième galet (41) coopérant avec une deuxième rainure ménagée dans l'accoudoir (17), de sorte qu'un déplacement de l'assise (11) du siège (10) lors d'un passage de la position relevée à la position lit du siège (10) pilote un déplacement de l'accoudoir (17) de la position haute vers la position basse et
**caractérisé en ce que** le mécanisme de déploiement (23) de l'accoudoir (17) comporte:
- un chariot (24) portant l'accoudoir (17) et monté mobile en translation par rapport à la pièce fixe (26), et au moins une biellette de basculement (29.1, 29.2), notamment deux biellettes de basculement (29.1, 29.2), ayant chacune une première extrémité liée en rotation avec ledit chariot (24) et une deuxième extrémité liée en rotation avec une partie supérieure de l'accoudoir (17).

2. Siège selon la revendication 1, **caractérisé en ce que** la ou les biellettes de basculement (29.1, 29.2) sont logées au moins en partie à l'intérieur de l'accoudoir (17).

3. Siège selon la revendication 1 ou 2, **caractérisé en ce que** la deuxième rainure de guidage (42) présente une portion rectiligne (42.1) et une portion incurvée (42.2), ladite portion rectiligne (42.1) autorisant l'accoudoir (17) à se déplacer uniquement en translation horizontale sur une distance prédéterminée avant de changer de niveau.

4. Siège selon la revendication 3, **caractérisé en ce que** la distance prédéterminée est comprise entre 40% et 60% d'une course totale de l'accoudoir (17) entre la position haute et la position basse.

5. Siège selon l'une quelconque des revendications 1 à 4, **caractérisé en ce que** la pièce fixe (26) est constituée par une coque d'intimité ou une console associée audit siège (10).

6. Siège selon l'une quelconque des revendications 1 à 5, **caractérisé en ce qu'**il comporte une manchette (44) destinée à combler un espace (43) entre ledit accoudoir (17) et le dossier (12) lorsque l'accoudoir (17) se trouve en position basse.

7. Siège selon la revendication 6, **caractérisé en ce qu'**une pièce liée à l'assise (11) est apte à remonter la manchette (44) vers le haut lors d'un déplacement du siège (10) de la position relevée à la position lit.

8. Siège selon l'une quelconque des revendications 1 à 7, **caractérisé en ce qu'**une face supérieure de l'accoudoir (17) forme un angle de l'ordre de quelques degrés avec un plan horizontal lorsque l'accoudoir (17) se trouve en position basse.

9. Cabine de véhicule comportant un siège (10) tel que défini selon l'une quelconque des revendications précédentes.

## Patentansprüche

1. Sitz (10), der zwischen einer erhöhten Position und einer Liegeposition umwandelbar ist, mit:
- einer Sitzbasis (11) und einer Rückenlehne (12),
- einer Kinematik zum Bewegen des Sitzes (10), um den Sitz (10) von einer erhöhten Position in eine Liegeposition und umgekehrt zu bewegen, wobei die Kinematik zum Bewegen des Sitzes (10) mindestens ein bewegliches Teil (37) umfasst, das mechanisch mit der Sitzbasis (11) verbunden ist,
- einer zwischen einer hohen und einer niedrigen Position bewegliche Armlehne (17) und
- einem Ausfahrmechanismus (23) für die Armlehne (17), der es der Armlehne (17) ermöglicht, sich automatisch von der hohen Position in die niedrige Position zu bewegen, wenn sich der Sitz (10) von der angehobenen Position in die Liegeposition und umgekehrt bewegt, wobei der Ausfahrmechanismus (23) für die Armlehne (17) umfasst:
- eine erste Führungsverbindung (35), die eine erste Rolle (36) umfasst, die mechanisch mit dem beweglichen, der Sitzbasis (11) zugeordneten Teil (37) verbunden ist, wobei die erste Rolle (36) mit einer ersten in der Armlehne (17) ausgebildeten Nut zusammenwirkt, und
- eine zweite Führungsverbindung (40), die eine zweite Rolle (41) umfasst, die mechanisch mit einem festen Teil (26) verbunden ist, wobei die zweite Rolle (41) mit einer zweiten, in der Armlehne (17) ausgebildeten Nut zusammenwirkt, so dass eine Bewegung der Sitzbasis (11) des Sitzes (10) während eines Übergangs von der angehobenen Position in die Liegeposition des Sitzes (10) eine Bewegung der Armlehne (17) von der hohen Position in die niedrige Position steuert, und **dadurch gekennzeichnet, dass** der Ausfahrmechanismus (23) für die Armlehne (17) umfasst:
- einen Schlitten (24), der die Armlehne (17) trägt und derart montiert ist, dass er relativ zum festen Teil (26) eine Translationsbewegung durchführt, und mindestens eine Kippstange (29.1, 29.2), insbesondere zwei Kippstangen (29.1, 29.2), die jeweils ein drehfest mit dem Schlitten (24) verbundenes erstes Ende und ein drehfest mit einem oberen Teil der Armlehne (17) verbundenes zweites Ende aufweist.

2. Sitz nach Anspruch 1, **dadurch gekennzeichnet, dass** die Kippstange(n) (29.1, 29.2) zumindest teilweise innerhalb der Armlehne (17) untergebracht sind.

3. Sitz nach Anspruch 1 oder 2, **dadurch gekennzeichnet, dass** die zweite Führungsnut (42) einen geradlinigen Abschnitt (42.1) und einen gekrümmten Abschnitt (42.2) umfasst, wobei der geradlinige Abschnitt (42.1) der Armlehne (17) nur eine horizontale Translationsbewegung über eine vorbestimmte Distanz ermöglicht, bevor er seine Höhe ändert.

4. Sitz nach Anspruch 3, **dadurch gekennzeichnet, dass** die vorbestimmte Distanz zwischen 40% und 60% eines Gesamtwegs der Armlehne (17) zwischen der hohen Position und der niedrigen Position beträgt.

5. Sitz nach einem der Ansprüche 1 bis 4, **dadurch gekennzeichnet, dass** das feste Teil (26) eine Sichtschutzschale oder eine mit dem Sitz (10) verbundene Konsole umfasst.

6. Sitz nach einem der Ansprüche 1 bis 5, **dadurch gekennzeichnet, dass** er eine Manschette (44) zum Ausfüllen eines Raums (43) zwischen der Armlehne (17) und der Rückenlehne (12), wenn sich die Armlehne (17) in der niedrigen Position befindet, aufweist.

7. Sitz nach Anspruch 6, **dadurch gekennzeichnet, dass** ein mit der Sitzbasis (11) verbundenes Teil in der Lage ist, die Manschette (44) nach oben anzuheben, wenn der Sitz (10) aus der angehobenen Position in die Liegeposition bewegt wird.

8. Sitz nach einem der Ansprüche 1 bis 7, **dadurch gekennzeichnet, dass** eine Oberseite der Armlehne (17) einen Winkel in der Größenordnung einiger Grad mit einer horizontalen Ebene bildet, wenn sich die Armlehne (17) in der niedrigen Position befindet.

9. Fahrzeugkabine mit einem Sitz (10) gemäß einem der vorhergehenden Ansprüche.

## Claims

1. A seat (10), convertible between a raised position and a bed position, said seat comprising:
- a seat base (11) and a backrest (12),
- a kinematics for moving the seat (10) in order to move the seat (10) from a raised position to a bed position and vice versa, said kinematics for moving the seat (10) comprising at least one moving part (37) mechanically linked to the seat base (11),
- an armrest (17) movable between a high position and a low position, and
- a deployment mechanism (23) for the armrest (17) allowing the armrest (17) to automatically move from the high position to the low position when the seat (10) moves from the raised position to the bed position, and vice versa, said deployment mechanism (23) for the armrest (17) comprising:
- a first guide connection (35) comprising a first roller (36) mechanically linked to the moving part (37) associated with the seat base (11), said first roller (36) cooperating with a first groove formed in the armrest (17), and
- a second guide connection (40) comprising a second roller (41) mechanically linked to a fixed part (26), said second roller (41) cooperating with a second groove formed in the armrest (17), so that a movement of the seat base (11) of the seat (10) during a transition from the raised position to the bed position of the seat (10) controls a movement of the armrest (17) from the high position to the low position and **characterized in that** the deployment mechanism (23) for the armrest (17) comprises:
- a carriage (24) carrying the armrest (17) and mounted so as to move in translation relative to the fixed part (26), and at least one tilting rod (29.1, 29.2), in particular two tilting rods (29.1, 29.2), each of them having a first end linked in rotation to said carriage (24) and a second end linked in rotation to an upper part of the armrest (17).

2. The seat according to claim 1, **characterized in that** the tilting rod(s) (29.1, 29.2) are housed at least partly inside the armrest (17).

3. The seat according to claim 1 or 2, **characterized in that** the second guide groove (42) includes a rectilinear portion (42.1) and a curved portion (42.2), said rectilinear portion (42.1) allowing the armrest (17) to move only in horizontal translation over a predetermined distance before changing level.

4. The seat according to claim 3, **characterized in that** the predetermined distance is between 40% and 60% of a total travel of the armrest (17) between the high position and the low position.

5. The seat according to any one of the claims 1 to 4, **characterized in that** the fixed part (26) comprises a privacy shell or a console associated with said seat (10).

6. The seat according to any one of the claims 1 to 5, **characterized in that** it comprises a cuff (44) for filling a space (43) between said armrest (17) and the backrest (12) when the armrest (17) is in the low position.

7. The seat according to claim 6, **characterized in that** a part linked to the seat base (11) is capable of raising the cuff (44) upwards when the seat (10) is moved from the raised position to the bed position.

8. The seat according to any one of the claims 1 to 7, **characterized in that** an upper face of the armrest (17) forms an angle of the order of a few degrees with a horizontal plane when the armrest (17) is in the low position.

9. A vehicle cabin comprising a seat (10) as defined according to any one of the preceding claims.
